# EUROPEAN PATENT SPECIFICATION

(11) **EP 1 225 200 B1**
(45) Date of publication and mention of the grant of the patent: **06.09.2006**
(21) Application number: 02250276.9
(22) Date of filing: 16.01.2002
(51) Int. Cl.: C08K 3/00, C08L 9/00, C08L 9/06, C08K 3/04, C08K 3/36

(54) **Rubber composition and pneumatic tire**
Kautschukzusammensetzung und Reifen
Composition de caoutchouc et pneu

(30) Priority: 17.01.2001 JP 2001009031
(43) Date of publication of application: 24.07.2002
(73) Proprietor: Bridgestone Corporation, Tokyo 104-0031 (JP)
(72) Inventor: Hiramitsu, Masaya, Bridgestone Corp. Tech. Center, Kodaira City, Tokyo (JP)
(74) Representative: Whalley, Kevin

(56) References cited:
- EP-A- 0 885 925
- EP-A- 0 899 297
- EP-A- 1 000 971
- EP-A- 1 069 160

## Description

This invention relates to a rubber composition comprising a blend of butadiene rubber and styrene-butadiene copolymer rubber and containing a mixture of carbon black and silica as a filler, and a pneumatic tire using such a rubber composition in a tread portion to simultaneously improve wet performance and wear resistance.

As to rubber compositions used in rubber articles such as hoses, conveyor belts, tires and the like, there have been made various studies for the development of a composition satisfying properties required for the rubber article.

Particularly, a rubber composition applied to a tread portion of a pneumatic tire is required to simultaneously satisfy wet performance and wear resistance at higher levels from a viewpoint of safety and durability.

A rubber composition comprising a blend of butadiene rubber and styrene-butadiene copolymer rubber as a rubber component is usually used in a tread portion of a passenger car tire. In such a rubber composition, however, it is difficult to simultaneously establish the wet performance and the wear resistance because these performances are conflicting with each other. That is, if it is intended to increase a blending ratio of the styrene-butadiene copolymer rubber for improving the wet performance, the wear resistance is degraded, while if it is intended to increase a blending ratio of the butadiene rubber for improving the wear resistance, the wet performance is degraded.

Also, it is considered that the influence of the styrene-butadiene copolymer rubber upon these performances is mainly controlled by a bound styrene content in the copolymer rubber.
Attention is also drawn to the disclosures of EP-1 000 971 A and EP-0 899 297 A.

It is, therefore, an object of the invention to simultaneously improve the wet performance and the wear resistance in a rubber composition comprising a blend of butadiene rubber and styrene-butadiene copolymer rubber by adjusting the blending ratio of the butadiene rubber and the bound styrene content in the styrene-butadiene copolymer rubber while considering the influence upon the other performances accompanied therewith.

According to a first aspect of the invention, there is provided a rubber composition containing a mixed filler of carbon black and silica, characterized in that a resin is compounded in an amount of not less than 4 parts by weight and not more than 10 parts by weight based on 100 parts by weight of a rubber component containing not less than 40% by weight of butadiene rubber, and styrene-butadiene copolymer rubber.

In a preferable embodiment of the first aspect, the amount of the butadiene rubber in the rubber component is not more than 60% by weight.

In another preferable embodiment of the first aspect, the styrene-butadiene copolymer rubber has a bound styrene content of not more than 40% by weight.

In a further preferable embodiment of the first aspect, the amount of the styrene-butadiene copolymer rubber in the rubber component is 40 to 60% by weight.

In a still further preferable embodiment of the first aspect, a compounding ratio of carbon black to silica in the mixed filler is 45/20 to 30/35.

In a yet further preferable embodiment of the first aspect, a thiuram based vulcanization accelerator is further compounded in an amount of not less than 0.5 part by weight based on 100 parts by weight of the rubber component.

In a further preferable embodiment of the first aspect, the amount of the thiuram based vulcanization accelerator compounded is not more than 3.0 parts by weight of the rubber component.

According to a second aspect of the invention, there is provided a pneumatic tire comprising a tread portion made from a rubber composition as defined in the first aspect of the invention.

In the rubber composition according to the invention, the amount of the butadiene rubber blended in the rubber component is not less than 40% by weight because when the amount is less than 40% by weight, the desired wear resistance is not obtained. Also, the amount of the butadiene rubber is preferably not more than 60% by weight. If the amount exceeds 60% by weight, a workability, particularly workability during the kneading and extruding of the rubber composition, is degraded. Preferably, the amount of the butadiene is 40-50% by weight. As the butadiene rubber, a polybutadiene having a higher cis-bond content is preferable from a viewpoint of the wear resistance.

In the styrene-butadiene copolymer rubber, the bound styrene content is not particularly limited. Fracture properties of a vulcanizate can be improved as the bound styrene content becomes higher, and a gripping performance of a tire can be improved when a rubber composition containing a styrene-butadiene copolymer rubber with a higher bound styrene content is applied to a tread of a pneumatic tire. However, when the bound styrene content becomes too large, the wear resistance is damaged, so that the bound styrene content is preferably not more than 40% by weight in the invention where an excellent wear resistance is required.

In the invention, a resin serving as a softening agent is compounded in an amount of not less than 4 parts by weight based on 100 parts by weight of the rubber component because when the compounding amount is less than 4 parts by weight, the compounding effect of the resin is not obtained. Moreover, the compounding amount of the resin is not more than 10 parts by weight. When the compounding amount is large, the rubber composition tends to closely adhere to a kneading machine such as rolls, a Banbury mixer or the like and hence the workability may be degraded.

The reason why the resin is compounded in the rubber component is as follows. That is, as the blending ratio of the butadiene rubber is increased in the rubber component containing a blend of butadiene rubber and styrene-butadiene copolymer rubber while maintaining a styrene amount in the rubber component at a constant level, the processability of the resulting rubber composition is deteriorated. For this end, the improvement of the processability has been carried out by increasing an amount of an oil compounded in the rubber composition until now. In this case, however, a hardness at a low strain region lowers, and when such a rubber composition is applied to a tread of a tire, a rigidity of a block formed on the tread surface lowers, and the wear resistance is degraded. In the invention, therefore, the resin is compounded instead of increasing the oil amount, whereby the deterioration of the processability is avoided while maintaining the hardness at the low strain region to a given level.

As the resin used in the invention, mention may be made of a dicyclopentadiene resin, a C5 petroleum resin and so on.

In the invention, an aromatic oil may be compounded in addition to the resin, whereby an effect of improving the wet performance and the processability can be obtained. In this case, the amount of the aromatic oil compounded is preferably not more than 8 parts by weight based on 100 parts by weight of the rubber component.

In the rubber composition according to the invention, the filler contains both carbon black and silica because the use of silica as a filler is preferable in view of the improvement of the wet performance, but as the amount of silica becomes larger, the wear resistance at a high load region tends to be lowered. In this connection, a compounding ratio of carbon black to silica is preferably 45/20 to 30/35.

In the rubber composition according to the invention, the compounding amount of the filler is not particularly limited, but from the view point of the properties of the vulcanizate and performance of the tire, it is preferable to be within the range of 45 to 80 parts by weight based on 100 parts by weight of the rubber component.

[0023-1] Moreover, a part of the filler used in the invention may be replaced with an inorganic filler represented by the formula (I):

mM·xSiO_{y}·zH₂O (I)

wherein M is a metal selected from the group consisting of aluminium, magnesium, titanium and calcium, an oxide or a hydroxide of such a metal or a hydrate thereof, and m is an integer of 1 to 5, x is an integer of 0 to 10, y is an integer of 2 to 5 and z is an integer of 0 to 10. Further, the formula (I) may contain a metal such as potassium, sodium, iron, magnesium or the like, an element such as fluorine or the like, and a group such as NH₄- or the like.

[0023-2] Specifically, the inorganic filler includes alumina (Al₂O₃) such as γ-alumina, α-alumina or the like; alumina monohydrate (Al₂O₃·H₂O) such as boehmite, diaspore or the like; alumina dihydrate (Al₂O₃·2H₂O); aluminium hydroxide [Al(OH)₃] such as gibbsite, bayerite or the like; magnesium hydroxide [Mg(OH)₂], magnesium oxide (MgO), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminium magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminium silicate (Al₂SiO₅, Al₄·3SiO₄·5H₂O, or the like), magnesium silicate (Mg₂SiO₄, MgSiO₃, or the like), calcium silicate (Ca₂·SiO₄ or the like), aluminium calcium silicate (Al₂O₃·CaO·2SiO₂ or the like), magnesium calcium silicate (CaMgSiO₄), and a crystalline aluminosilicate containing a hydrogen or an alkali metal or an alkaline metal for correcting an electric charge such as various zeolites; feldspar, mica, montmorillonite and the like. It is preferable that M in the formula (I) is aluminium. In this case, the inorganic fillers may be used alone or in a combination of two or more.

[0023-3] Among the above inorganic fillers, alumina represented by a formula of Al₂O₃·nH₂O (wherein n is 0 to 3) and clays are preferable. The clays include clay, kaolin, pyrophyllite, bentonite, montmorillonite and the like.

Further, the invention includes a rubber composition compounding a thiuram based vulcanization accelerator as a vulcanization accelerator for avoiding the lowering of the wet performance due to a long-term service of a rubber article. For example, when a tire is used over a long term, hysteresis loss is lowered by a curing action of the rubber and the wet performance is degraded accompanied therewith. For this end, the thiuram based vulcanization accelerator is compounded for preventing the degradation of the wet performance and maintaining the effect of simultaneously establishing the wet performance and the wear resistance. A compounding amount of the thiuram based vulcanization accelerator is preferably not less than 0.5 part by weight based on 100 parts by weight of the rubber component. When the compounding amount is less than 0.5 part by weight, the compounding effect is not sufficiently obtained. Also, the compounding amount is preferably not more than 3.0 parts by weight for sufficiently controlling the occurrence of cracks during the running which is considered to result from the increase of monosulfide in a crosslinking form.

Among the thiuram based vulcanization accelerators, a tetraalkyl thiuram sulfide is preferable, which includes tetramethyl thiuram disulfide (TMTD), tetraethyl thiuram disulfide (TETD), tetrabutyl thiuram disulfide (TBTD), tetramethyl thiuram monosulfide (TMTM), tetraoctyl thiuram sulfide (TOT) and so on. Among them, tetraoctyl thiuram sulfide is particularly preferable.

The rubber composition according to the invention may be properly compounded with various additives usually used in the rubber industry in addition to the above components.

The rubber composition according to the invention is suitable for a tread portion of a pneumatic tire for use in a passenger car or a small-size truck, and particularly suitable for tires used at an internal pressure of 4.0-5.5 kgf/cm² under a higher load.

The following examples are given in illustration of the invention and are not intended as limitations thereof.

Various rubber compositions are prepared according to a compounding recipe shown in Table 1. Then, they are vulcanized at 150°C for 30 minutes. Also, a pneumatic tire having a tire size of 195/70 R14 is manufactured by applying each of these rubber compositions to a tread of the tire. The properties of each of these rubber compositions before and after the vulcanization are measured to obtain results as shown in Table 1. Moreover, the measurements of the properties are carried out by the following methods.

### (1) Processability

It is represented by a Mooney viscosity measured at 130°C according to a test method of JIS K6300-1994. The smaller the numerical value, the better the processability.

### (2) Wet performance

The tire to be tested is mounted onto a vehicle and actually run on a wet road surface (having a water depth of 1.0-2.0 mm) and rapidly braked at a speed of 60 km/h to measure a running distance after the braking. The wet performance is represented by an index on the basis that the running distance of Comparative Example 1 is 100. The larger the index value, the better the wet performance.

### (3) Wear resistance

After the tire to be tested is actually run over a distance of 20,000 km, a remaining groove depth in the tread is measured and represented by an index on the basis that the measured value of Comparative Example 1 is set to 100.
The larger the index value, the better the wear resistance.

### (4) Hardness at low strain

It is represented by a dynamic storage modulus E' as measured according to a test method of JIS K7198-1991. The larger the measured value, the higher the hardness.

### (5) Wet performance after running

It is evaluated in the same manner as in the above item (2) after the tire to be tested is run over a distance of 2000 km.

**Table 1**

| (unit: part by weight) | | | | | | |
|---|---|---|---|---|---|---|
| Compounding recipe | Comparative Example 1 | Comparative Example 2 | Comparative Example 3 | Comparative Example 4 | Example 1 | Example 2 |
| SBR1 JSR 0120 *1 | 0 | 19.3 | 38.5 | 38.5 | 38.5 | 38.5 |
| | | (14) | (28) | (28) | (28) | (28) |
| SBR2 #1500 *2 | 74 | 53 | 32 | 32 | 32 | 32 |
| BR UBEPOL 150L *3 | 26 | 33 | 40 | 40 | 40 | 40 |
| Carbon black N220 | 45 | 45 | 45 | 45 | 45 | 45 |
| Silica Nipsil AQ*4 | 24 | 24 | 24 | 24 | 24 | 24 |
| Aromatic oil | 18.5 | 13.5 | 8 | 12 | 8 | 8 |
| Resin ESCOREZ1102 *5 | 0 | 0 | 0 | 0 | 4 | 4 |
| Stearic acid | 2 | 2 | 2 | 2 | 2 | 2 |
| Zinc white | 2.5 | 2.5 | 2.5 | 2.5 | 2.5 | 2.5 |
| Antioxidant 1 *6 | 1.5 | 1.5 | 1.5 | 1.5 | 1.5 | 1.5 |
| Antioxidant 2 *7 | 0.95 | 0.95 | 0.95 | 0.95 | 0.95 | 0.95 |
| Antioxidant 3 *8 | 0.22 | 0.22 | 0.22 | 0.22 | 0.22 | 0.22 |
| Vulcanization accelerator 1 *9 | 0.6 | 0.6 | 0.6 | 0.6 | 0.6 | 0.6 |
| Vulcanization accelerator 2 *10 | 1 | 1 | 1 | 1 | 1 | 1 |
| Vulcanization accelerator 3 *11 | 1 | 1 | | 1 | 1 | 1 |
| Vulcanization accelerator 4 *12 | 0 | 0 | 0 | 0 | 0 | 0.5 |
| Sulfur | 1.8 | 1.8 | 1.8 | 1.8 | 1.8 | 1.8 |
| Total oil content *13 | 18.5 | 18.8 | 18.5 | 22.5 | 22.5 | 22.5 |
| Total bound styrene content (weight %) *14 | 17.39 | 17.37 | 17.32 | 17.32 | 17.32 | 17.32 |
| Processability (ML 1+4) | 58 | 62 | 67 | 61 | 61 | 61 |
| Wet performance (index) | 100 | 100 | 102 | 102 | 102 | 102 |
| Water resistance (index) | 100 | 107 | 115 | 114 | 114 | 114 |
| Hardness at low strain (E') (30°C) | 20 | 21 | 21 | 18 | 20 | 20 |
| Wet performance after running (index) | | | | | 87 | 97 |

Note: *1 trade mark of a styrene-butadiene copolymer rubber extended with 37.5 parts of an oil per 100 parts of rubber component and having a bound styrene content of 35% by weight, which is made by JSR Corporation. Moreover, a rubber amount excluding the oil is shown in parenthesis.
*2 trade mark of a styrene-butadiene copolymer rubber not extended with an oil and having a bound styrene content of 23.5% by weight, which is made by JSR Corporation.
*3 trade mark of a butadiene rubber having a content of cis-bond of 97%, which is made by Ube Industries, Ltd.
*4 trade mark, made by Nippon Silica Industrial Co., Ltd.
*5 trade mark, made by Tonex Co., Ltd
*6 Santite A, trade mark, made by Seiko Kagaku Co., Ltd.
*7 Noclac 6c, trade mark, made by Ohuchi Shinko Chemical Industrial Co., Ltd.
*8 Noclac 224, trade mark, made by Ohuchi Shinko Chemical Industrial Co., Ltd.
*9 diphenyl guanidine
*10 N-cyclohexyl-2-benzothiazyl sulfenamide
*11 dibenzothiazyl disulfide
*12 tetraoctyl thiuram sulfide
*13 total amount of an oil included in SBR1, an oil as a compounding oil and an aromatic oil.
*14 a ratio of sum of bound styrene contents in rubber components to total amount of rubber components (weight %)

As seen from the comparison between Comparative Examples 1 and 2, the wear resistance is enhanced by increasing a blending amount of butadiene rubber, but the degree of improving the properties is low because the increase of the blending amount is small.

As seen from the comparison between Comparative Examples 2 and 3, the wet performance and wear resistance are improved by increasing a blending amount of SBR1 to increase the bound styrene content accompanied therewith and further increasing the blending amount of butadiene rubber. However, the amount of butadiene rubber is increased at the same level of the total oil content, so that the processability is degraded.

As seen from the comparison between Comparative Examples 3 and 4, the processability is improved by increasing an amount of an oil as a softening agent, but the hardness at a low strain region is lowered.

As seen from the comparison between Comparative Example 4 and Example 1, the hardness at a low strain region is improved by replacing a part of the softening agent with a resin.

As seen from the comparison between Examples I and 2, the lowering of the wet performance after the running is made very gentle by compounding tetraoctyl thiuram sulfide.

According to the invention, the blending amount of butadiene rubber and the bound styrene content in the styrene-butadiene copolymer rubber are adequately adjusted in the rubber composition comprising a blend of butadiene rubber and styrene-butadiene copolymer rubber, whereby the wear resistance and the wet performance can be simultaneously improved without damaging the processability and the hardness at a low strain region. Further, the lowering of the wet performance after long-term service can be controlled by compounding a thiuram based vulcanization accelerator.

## Claims

1. A rubber composition comprising;
a mixed filler comprising carbon black and silica;
a rubber component comprising styrene-butadiene copolymer rubber and not less than 40% by weight of the rubber component of butadiene rubber; and
a resin;
**characterized in that** the resin is compounded in the rubber component in an amount of 4 to 10 parts by weight based on 100 parts by weight of the rubber component.

2. A rubber composition as claimed in claim 1, **characterized in that** the amount of the butadiene rubber in the rubber component is not more than 60% by weight.

3. A rubber composition as claimed in claim 1 or 2, **characterized in that** the styrene-butadiene copolymer rubber has a bound styrene content of not more than 40% by weight.

4. A rubber composition as claimed in any of claims 1 to 3, **characterized in that** the amount of the styrene-butadiene copolymer rubber in the rubber component is 40 to 60% by weight.

5. A rubber composition as claimed in any of claims 1 to 4, **characterized in that** a compounding ratio of carbon black to silica in the mixed filler is 45/20 to 30/35.

6. A rubber composition as claimed in any of claims 1 to 5, **characterized in that** a thiuram based vulcanization accelerator is further compounded in an amount of not less than 0.5 part by weight based on 100 parts by weight of the rubber component.

7. A rubber composition as claimed in claim 6, **characterized in that** the amount of the thiuram based vulcanization accelerator compounded is not more than 3.0 parts by weight of the rubber component.

8. A pneumatic tire comprising a tread portion made from a rubber composition as claimed in any of claims 1 to 7.

## Patentansprüche

1. Kautschukzusammensetzung umfassend:
einen gemischten Füllstoff umfassend Ruß und Siliciumdioxid;
eine Kautschukkomponente umfassend Styrol-Butadien-Copolymerkautschuk und nicht weniger als 40 Gew.-% der Kautschukkomponente von Butadienkautschuk; und
ein Harz;
**dadurch gekennzeichnet, dass** das Harz in der Kautschukkomponente in einer Menge von 4 bis 10 Gewichtsteilen, auf 100 Gewichtsteile der Kautschukkomponente bezogen, compoundiert wird.

2. Kautschukzusammensetzung nach Anspruch 1, **dadurch gekennzeichnet, dass** die Menge des Butadienkautschuks in der Kautschukkomponente nicht mehr als 60 Gew.-% beträgt.

3. Kautschukzusammensetzung nach Anspruch 1 oder 2, **dadurch gekennzeichnet, dass** der Styrol-Butadien-Copolymerkautschuk einen Gehalt an gebundenem Styrol von nicht mehr als 40 Gew.-% aufweist.

4. Kautschukzusammensetzung nach einem der Ansprüche 1 bis 3, **dadurch gekennzeichnet, dass** die Menge des Styrol-Butadien-Copolymerkautschuks in der Kautschukkomponente 40 bis 60 Gew.-% beträgt.

5. Kautschukzusammensetzung nach einem der Ansprüche 1 bis 4, **dadurch gekennzeichnet, dass** ein Compoundierverhältnis von Ruß zu Siliciumdioxid in dem gemischten Füllstoff 45/20 bis 30/35 beträgt.

6. Kautschukzusammensetzung nach einem der Ansprüche 1 bis 5, **dadurch gekennzeichnet, dass** ein Vulkanisationsbeschleuniger auf der Basis von Thiuram des Weiteren in einer Menge von nicht weniger als 0,5 Gewichtsteilen, auf 100 Gewichtsteile der Kautschukkomponente bezogen, compoundiert wird.

7. Kautschukzusammensetzung nach Anspruch 6, **dadurch gekennzeichnet, dass** die Menge an compoundiertem Vulkanisationsbeschleuniger auf der Basis von Thiuram nicht mehr als 3,0 Gewichtsteile, auf die Kautschukkomponente bezogen, beträgt.

8. Luftreifen umfassend ein aus einer Kautschukzusammensetzung nach einem der Ansprüche 1 bis 7 hergestelltes Laufflächenabschnitt.

## Revendications

1. Composition de caoutchouc comprenant:
une charge mixte comprenant du noir de carbone et de la silice;
un composant de caoutchouc comprenant un caoutchouc copolymère de styrène butadiène et qui n'est pas inférieur à 40% en poids du composant de caoutchouc du caoutchouc de butadiène; et
une résine;
**caractérisée en ce que** la résine est mélangée dans le composant de caoutchouc selon une quantité de 4 à 10 parties en poids sur base de 100 parties en poids du composant de caoutchouc.

2. Composition de caoutchouc comme revendiqué dans la revendication 1, **caractérisée en ce que** la quantité de caoutchouc de butadiène dans le composant de caoutchouc n'est pas supérieure à 60% en poids.

3. Composition de caoutchouc comme revendiqué dans la revendication 1 ou 2, **caractérisée en ce que** le caoutchouc copolymère de styrène butadiène possède un contenu de styrène lié qui n'est pas supérieur à 40% en poids.

4. Composition de caoutchouc comme revendiqué dans une quelconque des revendications 1 à 3, **caractérisée en ce que** la quantité du caoutchouc copolymère de styrène butadiène dans le composant de caoutchouc est de 40 à 60% en poids.

5. Composition de caoutchouc comme revendiqué dans une quelconque des revendications 1 à 4, **caractérisée en ce que** le rapport de composition du noir de carbone à la silice dans la charge mixte est de 45/20 à 30/35.

6. Composition de caoutchouc comme revendiqué dans une quelconque des revendications 1 à 5, **caractérisée en ce qu'**un accélérateur de vulcanisation à base de thiurame est en outre mélangé dans une quantité qui n'est pas inférieure à 0,5 partie en poids sur base de 100 parties en poids du composant de caoutchouc.

7. Composition de caoutchouc comme revendiqué dans la revendication 6, **caractérisée en ce que** la quantité d'accélérateur de vulcanisation à base de thiurame mélangée n'est pas supérieure à 3,0 parties en poids du composant de caoutchouc.

8. Bandage pneumatique comprenant une partie de bande de roulement constituée d'une composition de caoutchouc comme revendiqué dans une quelconque des revendications 1 à 7.
